# EUROPEAN PATENT SPECIFICATION

(11) **EP 3 948 345 B1**
(45) Date of publication and mention of the grant of the patent: **07.05.2025**
(21) Application number: 20781804.8
(22) Date of filing: 27.02.2020
(51) Int. Cl.: G01S 7/481, G01S 17/04, G01S 17/06, G01S 17/10, G02B 5/02, G01S 17/88, G02B 27/10

(54) **VISUAL INDICATORS FOR PRESENCE SENSING SYSTEMS**
VISUELLE INDIKATOREN FÜR ANWESENHEITSERKENNUNGSSYSTEME
INDICATEURS VISUELS POUR SYSTÈMES DE DÉTECTION DE PRÉSENCE

(30) Priority: 29.03.2019 US 201962826619 P
(43) Date of publication of application: 09.02.2022
(73) Proprietor: OMRON Corporation, Shiokoji-dori, Shimogyo-Ku Kyoto-shi Kyoto 600-8530 (JP)
(72) Inventor: SANCHEZ, Alejandro, Ruiz, Fremont, California 94555 (US); SHTEYNBERG, Boris, Fremont, California 94555 (US); SOWUL, Adam, Fremont, California 94555 (US)
(74) Representative: HGF
(86) International application number: PCT/US2020/020221
(87) International publication number: WO 2020/205109

(56) References cited:
- EP-A1- 3 267 218
- US-A- 5 384 658
- US-A1- 2003 062 413
- US-A1- 2004 130 908
- US-A1- 2017 322 075
- US-A1- 2017 330 008
- US-A1- 2018 120 441
- US-B1- 10 222 474

## Description

### BACKGROUND

### Field of the Disclosure

Some embodiments disclosed herein relate to systems for determining a presence of an object, a distance to an object, a direction to an object, and/or a position of an objection, such as using a laser scanner or other optical device, and to visual indicators that can communicate information to a user.

### Description of the Related Art

Although various systems exist for sensing a presence of an object and for communicating information, there remains a need for improved systems.

US 10 222 474 B1 relates to a laser light illumination system coupled to a LIDAR system for combined integration into an automobile headlight, the illumination system being configured to selectively illuminate portions of an environment, for example to illuminate objects detected by the LIDAR system to warn a driver.

EP 3 267 218 A1 relates to a safety laser scanner for monitoring a hazardous environment. The scanner comprises a light source and a light receiver located behind a window having a cylindrical and a frustoconical section. The scanner is configured to detect the presence of a person or object in a safety zone and to issue a visual warning upon a detection.

### SUMMARY

Certain example embodiments are summarized below for illustrative purposes. The embodiments are not limited to the specific implementations recited herein.

Various embodiments disclosed herein can relate to a laser scanner according to claim 1.

Various embodiments disclosed herein can relate to a method of providing information regarding a presence or position of an object according to claim 12. Advantageous embodiments are provided in the dependent claims.

### BRIEF DESCRIPTION OF THE DRAWINGS

Certain embodiments will be discussed in detail with reference to the following figures, wherein like reference numerals refer to similar features throughout. These figures are provided for illustrative purposes and the embodiments are not limited to the specific implementations illustrated in the figures.
Figure 1 shows an example embodiment of a laser scanner configured for guarding hazardous equipment.
Figure 2 is a block diagram showing components of an example embodiment of laser scanner.
Figure 3 shows a perspective view of an example embodiment of a laser scanner.
Figure 4 shows a cross-sectional view of another example embodiment of a laser scanner.
Figure 5 shows a perspective view of an example embodiment of a laser scanner with a beacon-style visual indicator.
Figure 6 shows a perspective view of an example embodiment of a laser scanner with a portion of a window illuminated as a visual indicator.
Figure 7 shows a perspective view of an example embodiment of a laser scanner with another portion of the window illuminated as a visual indicator.
Figure 8 shows a perspective view of an example embodiment of a laser scanner with multiple illumination areas distributed across the window.
Figure 9 shows a perspective view of another example embodiment of a laser scanner with multiple illumination areas distributed across the window.
Figure 10 shows a perspective view of an example embodiment of a laser scanner that outputs two colors as a visual indicator.
Figure 11A is a partial perspective cross-sectional view of an example embodiment of a laser scanner with a visual indicator system.
Figure 11B shows an example embodiment of a flexible printed circuit board with light sources.
Figure 12 is a partial perspective cross-sectional view of another example laser scanner.
Figure 13 is a schematic cross-sectional view of an example embodiment of a window and light source for a laser scanner.
Figure 14 is a schematic cross-sectional view of another example embodiment of a window and light source for a laser scanner.
Figure 15 is a schematic cross-sectional view of another example embodiment of a window and light source for a laser scanner.

### DETAILED DESCRIPTION OF CERTAIN EMBODIMENTS

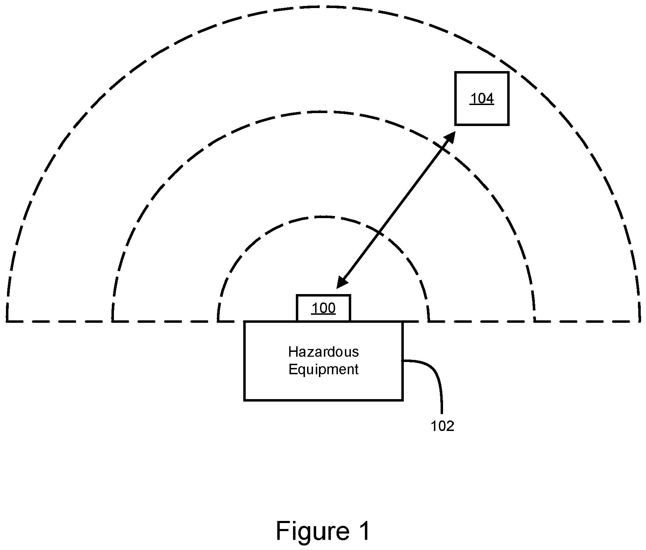

Laser scanners or other systems for sensing the presence and/or location of an object, for determining a direction to an object, and/or for measuring a distance to an object can be used in various applications, such as for guarding hazardous equipment (e.g., industrial machinery), for surveying, for security systems, for robot vision, robot guidance or pathfinding, etc. Figure 1 shows a laser scanner 100 configured for guarding hazardous equipment 102 (e.g., such as industrial machinery). Although various examples are provided herein with relation to laser scanners for machine guarding, the features and concepts disclosed herein can be applied to various other contexts such as range finders, surveying equipment, light curtains, motion detectors, navigation systems, autonomous vehicles, etc. A laser scanner 100 can emit a pulse of light and receive light reflected from an object 104, which can be measured and used to determine that the object 104 is present. In some applications, the laser scanner 100 can send pulses of light in multiple directions so that the direction to the object can be determined. For example, the laser scanner 100 can step light pulses across an angular field of view, such as at sub-degree increments, although other increments or other configurations could be used, depending on the application. In some cases, the laser scanner 100 can determine a distance to the object 104, such as by determining a time-of-flight for the light to travel to the object and then back to the laser scanner 100. For example, the distance to the object can be ½·c·t, where c is the speed of light, and t is the time-of-flight. Using the direction and distance information, the location of the object 104 can be determined. Action can be taken in response to the determination of the location, direction, and/or distance of the object. For example, the hazardous equipment 102 can be stopped if an object 104 (e.g., a person) comes within a threshold distance, or an alarm or warning can be issued, etc.

In some cases, one or more visual indicators on the laser scanner 100 can be used to visually convey information, such as to a user. For example, one or more light sources can be illuminated, to provide an alarm or warning, to indicate the presence, direction, and/or distance to an object, to indicate the status of the scanner or of the associated equipment (e.g., active or disabled, or machine run or machine stop), to indicate an error or troubleshooting information, etc. It can be useful for the one or more visual indicators to be visible from a wide range of angle. Some scanners 100 have a window that wraps around a field of view of the scanner 100 and enables the scanner 100 to emit and receive sensor light (e.g., laser light pulses and associated return reflections from objects 104) across a wide range of angles, as discussed herein. In some embodiments, the window, or portions thereof, can be illuminated to provide a visual indicator that can be visible across a wide range of angles. The window can be illuminated in a diffuse way, with one or more colors, in a solid color or pattern. Different colors, patterns, light locations, and lighting sequences can be used to communicate different things to a user. Using the existing window for the visual indicator can incorporate beacon-style indication lighting into the scanner 100, without the added complexity, cost, and space that would come with adding a traditional beacon light to the scanner or associated system.

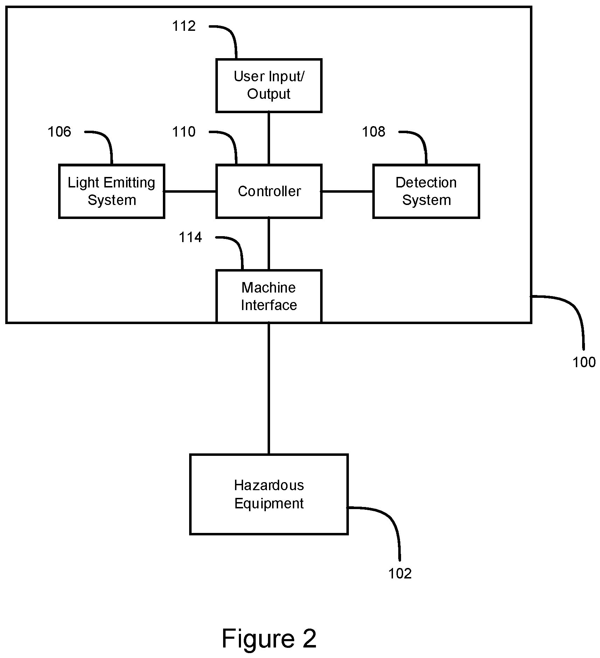

Figure 2 is a block diagram showing components of an example embodiment of a laser scanner 100. The laser scanner 100 has a light emitting system 106, which can be configured to emit light, such as by producing pulses of light. The light emitting system 106 has a laser, such as a pulse laser that is configured to output discrete laser pulses. The laser scanner 100 has a detection system 108 configured to receive light (e.g., of the laser pulses) that is reflected from the object 104 back to the laser scanner 100. The laser scanner 100 has a controller 110 configured to control operations of the laser scanner 100, as described herein. The controller 110 includes one or more hardware processors, and can execute instructions that are stored in computer-readable memory (e.g., in a non-transitory computer readable medium). The laser scanner 100 can have a machine interface 114, which can output instructions to corresponding equipment 102 (e.g., industrial machinery) or other external devices. For example, the laser scanner can stop the machinery or move the machinery to a safety configuration if an object (e.g., a person) is detected at a specified location or distance, etc. Other output signals can also be provided, such as for warnings or alarms or data logging, etc.

The laser scanner 100 can have input/output features 112. For example, user input elements (e.g., one or more buttons, dials, switches, microphone, etc.) can be used to receive input from a user. User output elements (e.g., one or more lights, speakers, displays, printers, etc.) can be used to output information to a user. In some cases, user input and output elements can be combined, such as using a touchscreen display. The input and output elements 112 can be used to configure, operate, and/or troubleshoot the laser scanner 100. The output elements 112 can provide presence, direction, distance, and/or location information regarding an object. By way of example, the laser scanner 100 can have multiple lights, which can be selectively illuminated to indicate a direction of an object. Different colors, light intensity, or numerical values can be output to indicate a distance of a detected object from the scanner 100. The laser scanner 100 can output a first color of light (e.g., green) for a safe condition (e.g., in which no object is determined to be in a dangerous location or range) and can output a second color of light (e.g., red) for a danger conduction (e.g., in which an object is determined to be in a dangerous location or range). Many alternatives are possible.

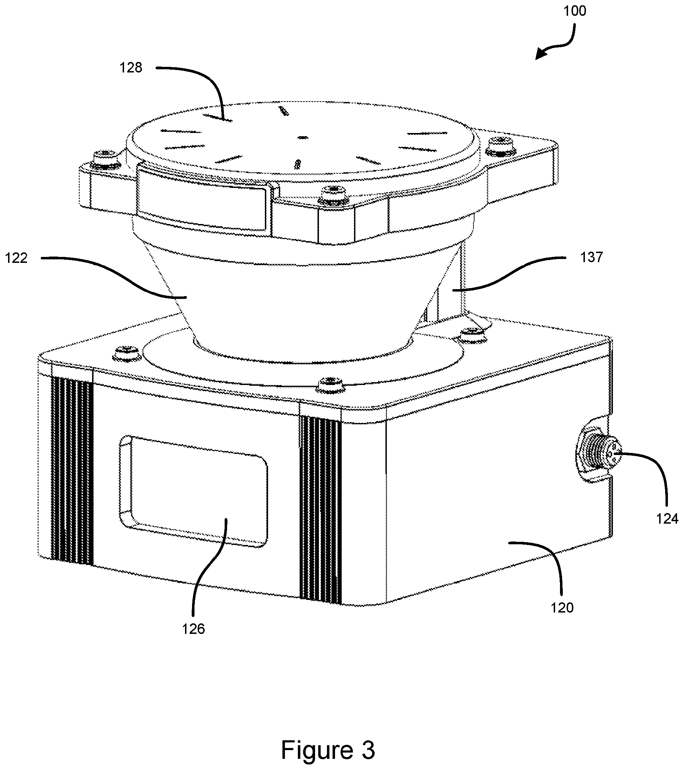

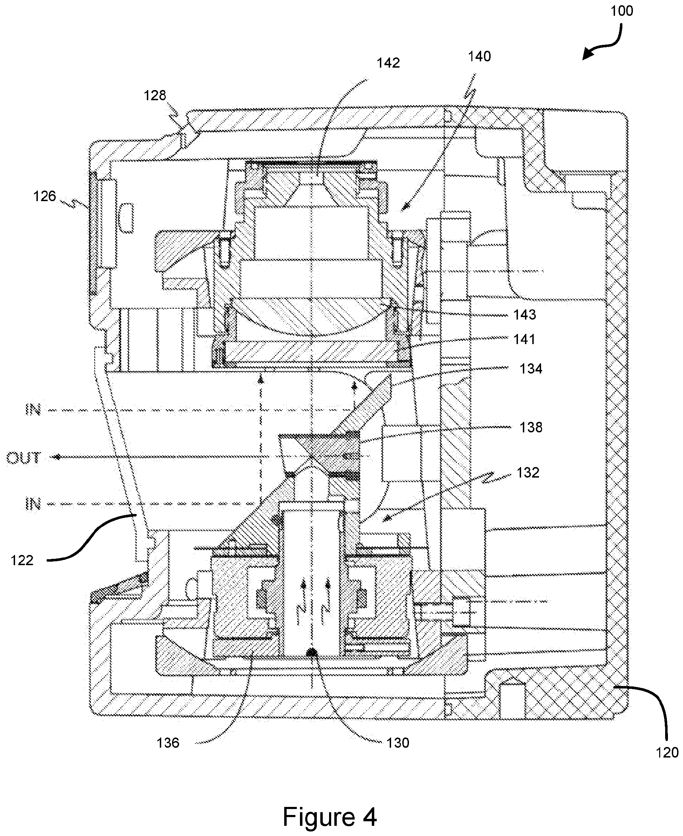

Figure 3 is a perspective view of an example embodiment of a laser scanner 100. Figure 4 is a cross-sectional view of another example embodiment of a laser scanner 100. The laser scanner 100 can have a housing 120, which can enclose or otherwise protect various components of the laser scanner 100, such as electrical and/or optical components. The laser scanner 100 has a window 122, which can enable light (e.g., from the light emitting system 106) to exit the laser scanner 100 and/or can enable light (e.g., reflected from the object 104) to enter the laser scanner 100, so that the received light can be detected by the detection system 108.

A port 124 can receive a corresponding plug to transfer information to or from the laser scanner 100, such as to implement the machine interface 114. Information can be communicated through a wired connection (e.g., via the port 124), or the scanner 100 can have a wireless communication system for sending and/or receiving information wirelessly. A power cable (which not visible in Figures 2 and 3) can supply power to the laser scanner 100, although other types of power sources can be used, such as a battery. The laser scanner 100 can have a display 126 which can output information and/or receive user input (e.g., a touchscreen). The display 126 can display text, images, or in some cases can display light colors or patterns (e.g., green, red, flashing, etc.) to indicate information to a user. In some embodiments, a plurality of light indicators 128 can be illuminated to indicate a direction of a detected object, or to output other information.

The scanner 100 has a light source, such as a laser light source 130, which can emit light (e.g., laser pulses). One or more optical elements 132 can redirect the light (e.g., out of the laser scanner), or otherwise modified the emitted light. The optical elements 132 of the light emitting system 106 can include one or more lenses, filter, mirrors, etc. which can modify or redirect the light. In some cases, one or more collimating optical elements (e.g., collimating lenses) can be used to collimate light emitted by the light source 130. Although some examples are discussed in connection with a laser scanner, in some cases the scanner 100 can use non-laser light, which can be collimated in some implementations. The scanner 100 can include a rotatable mirror 134, which can redirect the light out of the scanner 100 at different azimuthal angles depending on the rotational position of the rotatable mirror 134. The rotatable mirror 134 can be angled relative the path of the emitted light that impinges on the rotatable mirror 134 (e.g., by an angle between about 30 degrees and about 60 degrees, about 40 degrees and about 50 degrees, or about 45 degrees). A motor 136 can rotate the rotatable mirror 134 (e.g., about a vertical rotation axis). Light (e.g., laser pulses) can be emitted through the window 122. The window has a generally inverted frustoconical shape. The window can extend across an angle of about 90 degrees, about 120 degrees, about 150 degrees, about 180 degrees, about 210 degrees, about 240 degrees, about 270 degrees, about 300 degrees, about 330 degrees, or more, or any values or ranges therebetween. The scanner 100 can sweep or step laser pulses across a field of view or detection area, such as across an angle of about 90 degrees, about 120 degrees, about 150 degrees, about 180 degrees, about 210 degrees, about 240 degrees, about 270 degrees, about 300 degrees, about 330 degrees, or more, or any values or ranges therebetween. A turning mirror 138 can redirect light from the light source 130, such as to help turn or redirect the light out of the scanner 100.

In some embodiments, a conduit 137 can extend from a lower housing portion to an upper housing portion, such as along a back side of the scanner 100. The conduit 137 can house wires or other interconnections, such as between the scanner power source and/or controller and the light sources 128 or other components. The conduit 137 (e.g., and/or the components contained therein) can impede the transmission of light, which can block output or input of light across an azimuthal angle range, such as of about 3 degrees, about 5 degrees, about 7 degrees, about 10 degrees, about 15 degrees, about 20 degrees, about 25 degrees, about 30 degrees, about 45 degrees, about 60 degrees, about 75 degrees, about 90 degrees, about 105 degrees, about 120 degrees, about 150 degrees, about 180 degrees, or more, or any values or ranges therebetween. The conduit 137 can be made of the same material, and/or can be integrally formed with, the window 122. In some cases, the conduit 137 can form a break in the generally cylindrical and/or frustoconical shape of the window 122. In some cases, the conduit 137 can be formed separate of the window 122, and/or can be made of different material than the window 122. The conduit 137 can be formed as a portion of the housing 112, for example. In some embodiments, the conduit 137 can be omitted. In some embodiments, the window 122 can extend a full 360 degrees. Some scanner embodiments can emit light, and/or receive return reflections, across a full 360 degree range.

Light can be reflected from an object and the reflected light can return to the laser scanner 100. Return reflections of the emitted light can be received through the window 122. One or more optical elements 140 can redirect the received light and/or otherwise modify the received light before it is measured by an optical sensor 142. The one or more optical elements 140 can include one or more lenses 143, filters 141, mirrors, etc. The optical sensor 142 can generate signals based at least in part on the light reflected by the object and received by the laser scanner 100. The rotatable mirror 134 can direct the received light towards the optical sensor 142. The optical sensor 152 can be a photodiode such as an avalanche photodiode, although any suitable type of image sensor can be used. The image sensor 142 can convert the received light to electrical signals. The scanner 100 can analyze the electrical signals to determine the presence, direction, distance, and/or location of an object 104.

The scanner 100 can illuminate the window 122 to output information. It can be beneficial for the visual indication light to be easily visible, such as from a wide range of angles. For example, the visual indication light can be used to get a user's attention if there is a safety issue. The window 122 is an easily visible component of the scanner 100, because the window is used to output and receive sensor light across a wide range of angles. Illuminating the window (e.g., with visible light) as a visual indicator can efficiently provide a high visibility visual indicator.

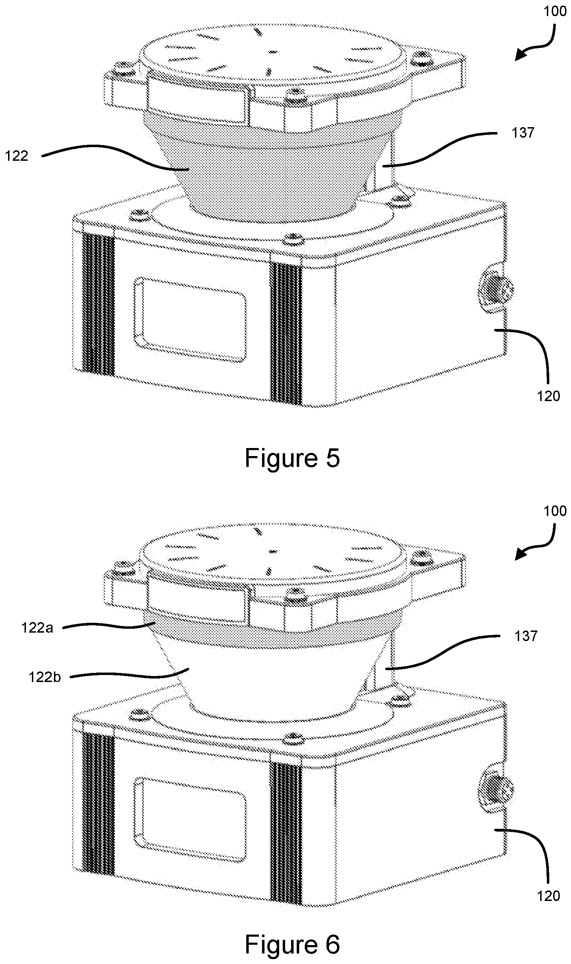

Figure 5 shows an example embodiment of a laser scanner 100 with the window 122 illuminated to provide a visual indicator. The illuminated window 122 can provide beacon-style lighting. In some embodiments, the full window 122 can be illuminated, as shown for example, in Figure 5. Light (e.g., diffused light) can be emitted (e.g., in various directions) from the full are of the window 122. In some embodiments, a first portion of the window 122a can be illuminated while a second portion of the window 122b is not illuminated, as shown for example in Figure 6. The window has a first portion 122a that has a generally cylindrical shape. The window has a second portion 122b that has a generally frustaconical shape. The first portion 122a can be disposed above the second portion 122b. The window 122 can emit the visual indicator light across a field of view, such as across about 90 degrees, about 120 degrees, about 150 degrees, about 180 degrees, about 210 degrees, about 240 degrees, about 270 degrees, about 300 degrees, about 330 degrees, or about 360 degrees, or any values or ranges therebetween. In some embodiments, the conduit 137 can impede the visual indicator light from being emitted in the conduit area. In some embodiments, the conduit 137 can be illuminated along with the window. In some embodiments, the conduit 137 can be omitted, as described herein, and the visual indicator light can be emitted via the window 122 across a full 360 degree field of view.

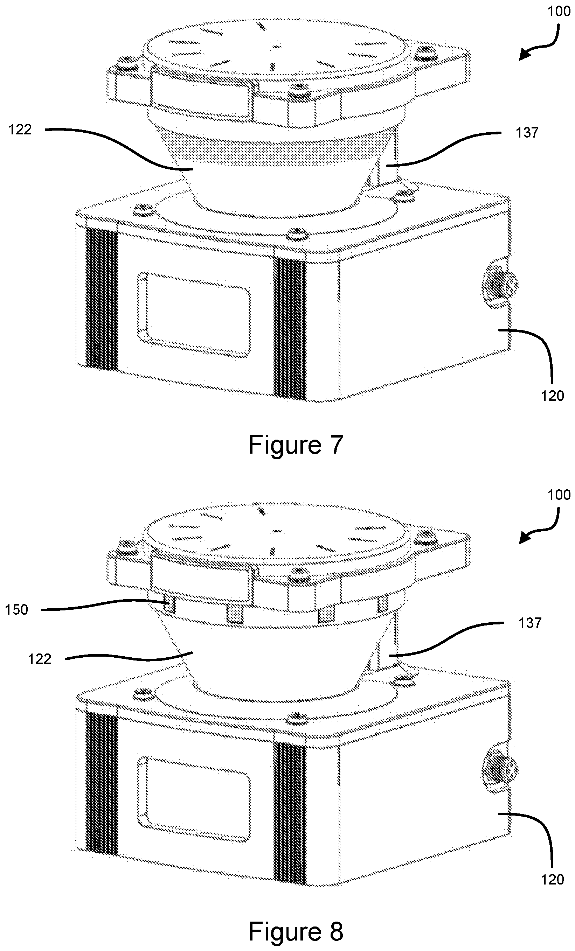

Many different portions of the window 122 can be illuminated, in various different patterns and color combinations. Figure 7 shows an example embodiment in which a portion of the generally frustoconical portion of the window 122 is illuminated, while the generally cylindrical portion of the window 122 is not illuminated. Alternatively, the entire frustoconical portion of the window 122 can be illuminated, while the generally cylindrical portion of the window 122 is not illuminated. A majority of the window 122 area can be illuminated, or a minority of the window 122 area can be illuminated. In various embodiments, about 5%, about 10%, about 20%, about 30%, about 40%, about 50%, about 60%, about 70%, about 80%, about 90%, or about 100% of the window 122 area can be illuminated, or any values or ranges therebetween.

As described in further detail herein, diffusing features and/or the distribution of light sources can produce a generally even distribution of light emitted from the illuminated area of the window 122. In some embodiments, distinct areas of the window 122 can be selectively illuminated, such as to provide an indication of a direction of an object. Figure 8 shows an example scanner 100 having a plurality of illumination areas 150 distributed radially across at least a portion of the window 122. In Figure 8, four illumination areas are shown illuminated simultaneously. In practice, a single illumination area 150 can be illuminated to indicate a directional position of a detected object. Multiple illumination areas 150 can be illuminated to indicate the direction positions of multiple objects, or to indicate a directional position of a single object (e.g., if the object is directionally between two illumination areas 150). The scanner 100 can have more illumination areas than shown in Figure 8. For example, additional illumination areas can be between the illumination areas 150 that are shown illuminated in Figure 8. In some cases, a continuous set of illumination areas can extend around the field of view of the scanner (e.g., with adjacent illumination areas abutting each other). Or the adjacent illumination areas can be separated by a space or gap, which can facilitate the illumination of distinct illumination areas 150.

In some cases, the illumination areas 150 can have a hard edge that transitions sharply from being illuminated to not being illuminated (e.g., as can be seen in Figure 8). For example, an illumination area can have diffusing feature that can cause light to exit the window at the illumination area 150, and the area immediately surrounding the illumination area does not have diffusing features, so that the area immediately adjacent to the illumination area does not output substantial amounts of light. Some stray illumination light may exit the window at any area of the window, but the presence or lack of diffusing features at given areas can cause a sharp contrast between illumination areas and non-illumination areas.

In some embodiments, an illumination area 150 can have a soft transition from the illuminated area to non-illuminated area. For example, diffusing features can be distributed throughout the window 122 or region thereof. A single light source, or a subset of light sources, can be illuminated to selectively illuminate an illumination area 150. The portion of the illumination area 150 closest to that light source, or subset of light sources, can have a brightest illumination, while the intensity of the illumination would reduce gradually as distance from that light source, or subset of light sources, increases.

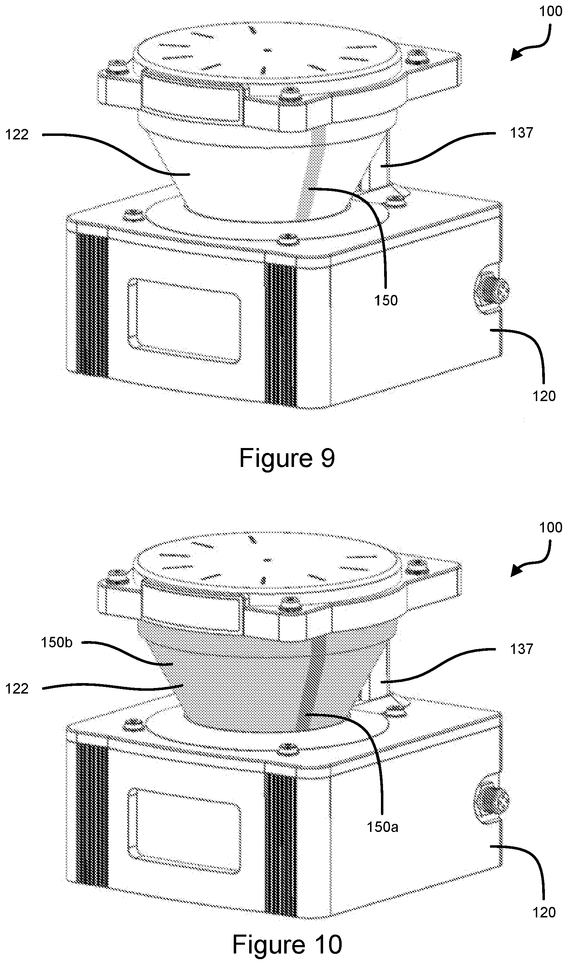

In the example of Figure 8, the distinct illumination areas 150 are provided on the top region of the window 122, which in this example is generally cylindrical in shape. In the example of Figure 9, the illumination areas 150 can extend vertically across the full height of the window 122. The illumination areas 150 could extend across the generally cylindrical portion of the window 122, and at least partially down on the generally frustoconical portion of the window 122. The illumination portion 150 can stop prior to the sensor light exit region, as discussed further herein. Figure 9 shows an example, in which the window 122 can be illuminated with two colors. A first color can be used to illumination an illumination region 150a, which can indicate a directional position of a detected object, as discussed herein. A second color can be used to illumination at least a portion 150b, and in some cases the entire remaining portion, of the window 122. For example, the illumination of the second color (e.g., region 150b) can be visible across a broad field of view, such as to easily draw the attention of a user, while the illumination of the first color (e.g., region 150a) can provide the specific indication of the direction of the detected object. Thus, once the user's attention has been directed to the laser scanner (e.g., by the second color), the user can quickly determine the direction of the detected object (e.g., by the first color), which can help the user determine whether an object needs to be moved, identify a potentially dangerous situation, quickly take remedial action, determine if a false positive determination was made, or otherwise troubleshoot the scanner 100, etc.

The scanner 100 can determine a direction of a detected object. The illumination area 150 that is closed in direction to the determined direction of the object can be illuminated.

Many different configurations of illumination areas 150 can be used, such as depending on the particular application or use. Multiple colors on the individual indicators and multiple lighting patterns could be used to convey various types of information. For example, a constant solid lighting approach can be used (e.g. when the area protected is clear the window stays green, and when the protected area is not clear the window can turn red). When the sensor is in a configuration state, the window color can flash in a single color (e.g. a flashing yellow color). When the sensor is in fault mode, the window color could alternate flashing in two colors and use a faster rate to better call for attention (e.g. light up in red for half a second, then light up in yellow for half, repeatedly). When the sensor is in interlock state, which means it is waiting for an operator to push a button, the window could light up in a stripe or area of light that spins around and around the window. This "spinning circle" can be an intuitive method to convey the concept of "waiting" (e.g., similar to a mouse pointer spinning circle while a computer system is busy).

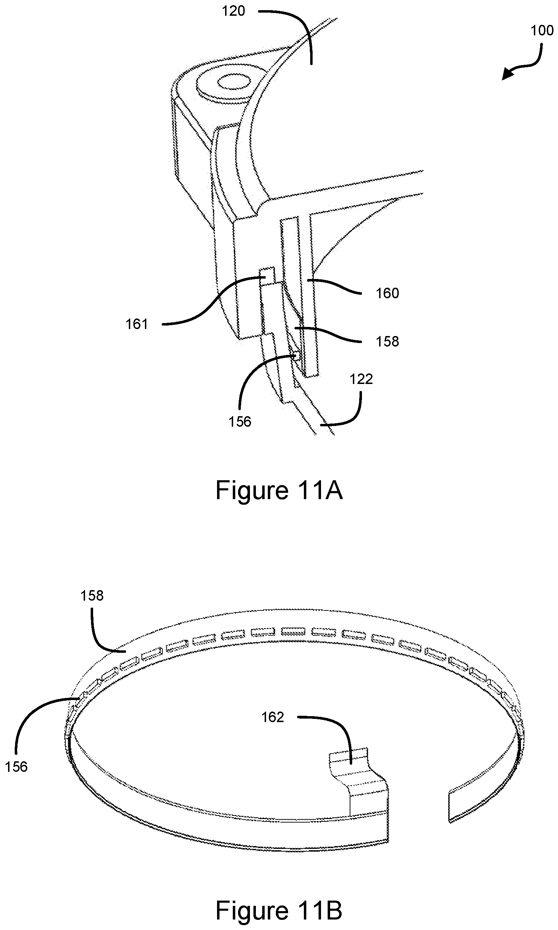

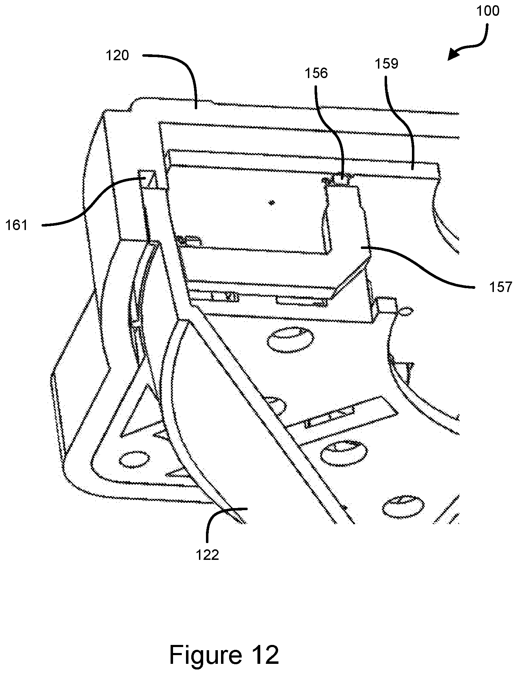

Figure 11A is a partial perspective cross-sectional view of an example embodiment of a scanner 100. Figure 11B shows a perspective view of an example embodiment of light sources 156 and flexible printed circuit board (PCB) 158 of Figure 11A. The scanner 100 can have a plurality of light sources 156, which can be light emitting diodes (LEDs) or any other suitable type of light source. The light sources 156 can be selectively illuminated to produce visual indicators of various different types, such as those specifically discussed herein. The light sources 156 can produce a single color of visible light, or multiple colors of visible light. By way of one specific example, the light sources 156 can include red and green light sources, which can be selectively illuminated to produce a red window 122 or a green window 122. In some cases, three or more colors of light sources (e.g., red, green, and blue) can be illuminated at various different intensities to provide a spectrum of different available colors. For example, each light source illustrated in Figure 12 can include a red light source element, a blue light source element, and a green light source element, so that each of the light sources 156 can emit various different colors. Different tricolor combinations can be used, or any other suitable combination of any number of light source elements, for the particular application or use.

The light sources 156 can be disposed on a flexible printed circuit board (PCB) 158. The flexible PCB 158 can be an elongate PCB, which can wrap around a support structure 160. The support structure can be part of the housing 120, can be integrally formed with the housing 120, or can be a rigid component that is coupled to the housing 120. In some embodiments, a gasket 161 can be disposed between the window 122 and the housing 120. Light sources 156 (e.g., and the associated flexible PCB) can extend around an azimuthal range of about 90 degrees, about 135 degrees, about 180 degrees, about 225 degrees, about 270 degrees, about 315 degrees, about 360 degrees, or any values or ranges therebetween. In some embodiments, power and/or control signals can be delivered to the light sources through one or more wires that extend through the conduit 137. A connector 162 can couple the power and/or control signals into the flexible PCB 158, which can send the power and/or control signals to the respective light sources 156. The light sources 156 can be oriented to face radially outward. As can be seen in Figure 11A, the light sources can be disposed adjacent, near, or abutting the window 122, so that the light sources 156 can input light into the window 122. In some embodiments, the window can have diffusing features, as discussed herein, which can diffuse the light from the light sources 156, and the window 122 can then output the diffused light as a visual indicator. Various other implementations are possible, which can position or orient the light sources in different manners, depending on the particular application or use. For example, Figure 12 shows an example embodiment with light sources (e.g., LEDs) 156 positioned on a rigid board 159 (e.g., PCB) with a light pipe 157 to guide the light (e.g., by total internal reflection) from the light source 156 to the window 122. Although in the cross-section of Figure 12, only one light source 156 and light pipe 157 are shown, the scanner 100 can include a plurality of light sources 156 and associated light pipes 157 (e.g., arranged in a circle, arc, or other arrangement).

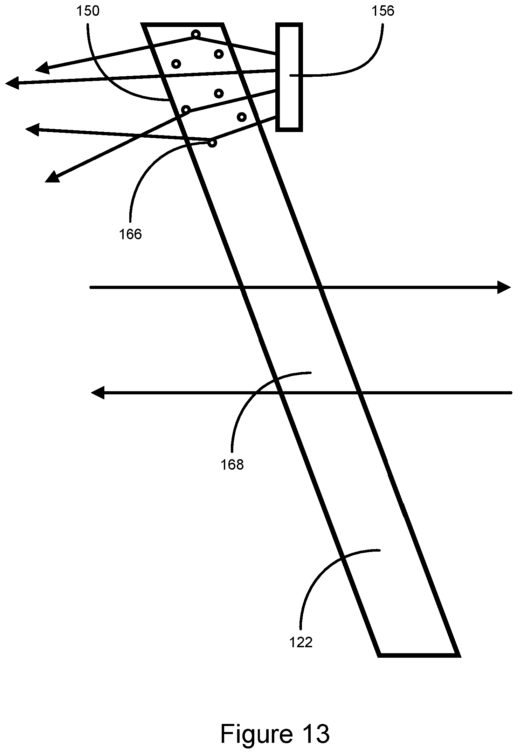

Figure 13 shows a schematic cross-sectional view of an example embodiment of a light source 156 and window 122 of a scanner. The light source 156 can be oriented emit light into the window 122. The window 122 can have light diffusing features 166, which can be configured to diffuse the light, so that the window outputs diffused light. The diffusing features 166 can include light diffusing particles, voids, pigment, diffraction gratings, or rough surface features. In the example of Figure 13, diffusing particles are shown dispersed in an illumination portion 150 of the window. In Figure 13, the diffusing features are limited to the illumination portion 150, and the rest of the window 122 does not have light diffusing features. In some embodiments, the region of the window 122 through which sensor light (e.g., laser pulses) is emitted does not include light diffusing features. This can impede or prevent unintended diffusion of the sensor light that is output by the sensor 100, which could interfere with the presence or position sensing functionality. In some embodiments, a return reflection receiving portion of the window does not have diffusing features, which can facilitate collection of reflected light for delivery to the optical sensor 142.

In some cases, reflected light can be collected by various portions of the window 122, which can include portions with diffusing features and/or portions without diffusing features. If return reflections pass through a portion of the window with diffusing features, in some implementations, the diffusing features can diffuse the returning light. At least a portion of the diffused returning light can still enter the scanner 100, and can still be directed to the light sensor 142. Accordingly, in some cases, it can be more beneficial to impede diffusion of the emitted sensor light, than to impede diffusion of the returning sensor light. In some cases, the diffusing features 166 of Figure 13 can extend further downward, such to until the location 168, near the sensor light output region (which can be defined by the position of the light source 130, the turning mirror 138, and/or the rotatable mirror 134). The sensor light output region can be a horizontal stripe that extends across the field of view of the window 122. An upper region of the window can be used as the visual indicator (e.g., extending downward until the sensor light output region). In some cases, the light sourced can be on the bottom of the window. A lower region of the window 122 can be used as the visual indicator (e.g., extending upward until the sensor light output region). In some cases, light sources can be disposed at the upper portion and at the lower portion of the window 122. Both the upper region and lower region of the window can be used as the visual indicator (e.g., with a stripe therebetween that corresponds to the sensor light output region and is not used as the visual indicator). In some embodiments, vertical stripes of areas with diffusing features can alternate with vertical stripes of areas without diffusing features. The sensor light can be output through the areas without diffusing features. The visual indicator light can be diffused by the areas of the window with the diffusing features.

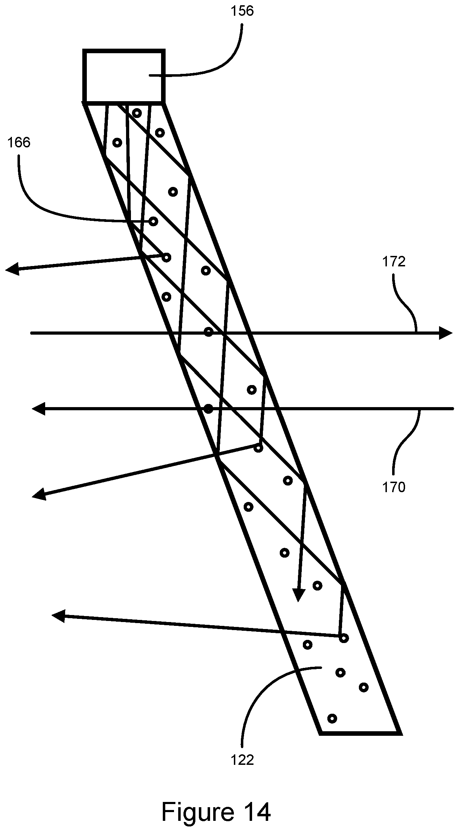

The window 122 can be used to guide light, such as by total internal reflection (TIR), which can be seen in Figure 14, for example. The light source 156 can be configured to input light into the window 122. For example, the light source 156 can be optically coupled to the window, such as using an index matching adhesive or material. The light source 156 can input at least some of the light into the window at angle sufficient to produce total internal reflection of the light. The window 122 can include light diffusing features 166, which can diffuse the light propagating in the window 122. At least some of the diffused light can be redirected at angles that overcome TIR and exit the window (e.g., in a radially outward direction). In Figure 14, the light diffusing features 166 can be dispersed particles or voids.

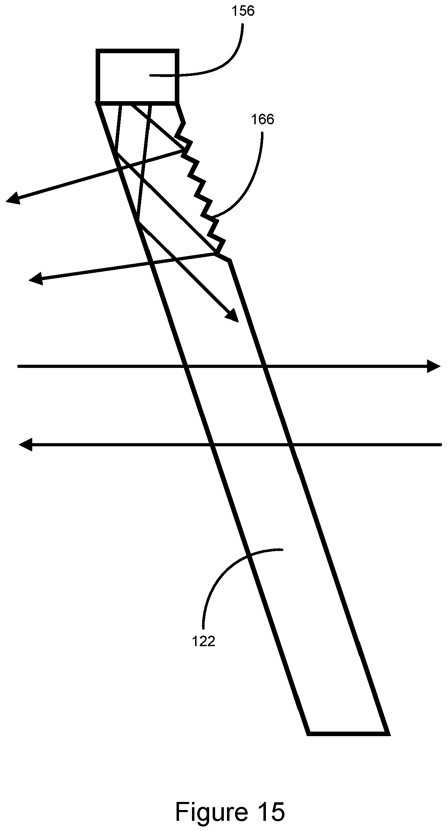

Various types of light diffusing features can be used. For example, Figure 15 shows an example embodiment having light diffusing surface features 166. For example, the front and/or back surfaces of the window 122 can be rough so that light is scattered (e.g., by reflection or refraction at the rough surface features). Periodic or randomized surface features can be used. The diffusing features 166 can be turning features, which can be configured to turn light (e.g., that can be propagating in the window 122 by TIR) so that it is emitted out of the window (e.g., at randomized directions). The surface light diffusing features 166 can be formed by etching, sand blasting, injection molding with rough mold surfaces, or any other suitable manner. The window 122 can be frosted glass, in some cases.

In some cases, the window 122 can have a pigment or film, which can impede visibility through the glass into the internal components of the scanner 100. The pigment or film can also diffuse visible light for the visual indicator feature. In some embodiments, the light diffusing features 166 can be omitted, and the visual indicator light can be emitted through the window with diffusion of the light.

The light used for detecting the presence or position of the object can be different from the light used for the visual indicators. The sensor light (e.g., emitted by the pulse laser 130) can have a first wavelength (or range), and the visual indicator light can have a second wavelength (or range). For example, the sensor light can be infrared (IR) or near-infrared (NIR) light. The light source 130 can be an IR or NIR laser. The sensor light can have a wavelength of about 700 nm to about 8,000 nm; 700 nm to about 3,000 nm; about 750 nm to about 1,400 nm; about 750 nm to about 950 nm; or any values or ranges between any of these wavelengths. Other wavelengths of sensor light can be used in other implementations, such as visible light, ultraviolet light, etc. The visual indicator light can be visible light. The visual indicator light can one or more wavelengths between about 380 nm and about 750 nm, between about 400 nm and about 700 nm, or any values or ranges between any of these wavelengths. The sensor light and the visual indicator light can be different wavelengths, which can prevent or impede interference between the two types of light.

In some embodiments, the diffusing features 166 can diffuse the sensor light less than the visual indicator light. For example, wavelength specific diffusing features can be used. For example, the window 122 and/or the diffusing features 166 can be made of material that is relatively transparent to the sensor light (e.g., IR or NIR) as compared to the visual indicator light (e.g., visible light). In some cases, the diffusing particles can have an index of refraction difference relative to the window material that is greater for the visual indicator light than for the sensor light. Accordingly, the sensor light can pass through the window and diffusing features without substantial refraction or scattering, while the visual indicator light can be scattered (e.g., by refraction) by the window 122 and diffusing feature 166. For example, with reference to Figure 14, the output sensor light 170 can pass through the window 122 and through one or more light diffusing features 166 without substantially diffusing or redirecting the output sensor light 170. The returning sensor light 172 (e.g., reflected from an object) can pass through the window 122 and through one or more light diffusing features 166 without substantially diffusing or redirecting the output sensor light 170.

In some embodiments, the light receiving system can include a filter (e.g., a bandpass filter), which can permit the sensor light (e.g., the first wavelength or range, such as IR or NIR light) to reach the optical sensor 142, while impeding other light such as the visual indicator light (e.g., of the second wavelength or range, such as visible light) from reaching the optical sensor 142.

In some embodiments, the light sources 156 of the visual indicator can be off while the sensor system is operating, and can be turned on when the sensor system is not operating. Accordingly, the scanner 100 can use the sensor light and visual indicator light at different times. This can impede interference between the sensor light and the visual indicator light. In some embodiments, the same or overlapping wavelengths of light can be used for the sensor light and the visual indicator light. The alternating of the sensor and visual indicator systems can also impede electrical interference, or other complications that could arise from both systems operating simultaneously. As a first operation during a first time, the scanner 100 can emit light, receive return reflections, and/or process signals from the received light. As a second operation during a second time, the scanner can emit visible light to provide a visual indication of information (e.g., about the sensor or the detected object). For example, at the second time, the system can output a visual indication of the presence or position (e.g., directional position and/or distance) of the object that was determined during the first time or during a previous operation. The first and second operations can be performed at different, alternating times.

In some embodiments, the methods, techniques, microprocessors, and/or controllers described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination thereof. The instructions can reside in RAM memory, flash memory, ROM memory, EPROM memory, EEPROM memory, registers, hard disk, a removable disk, a CD-ROM, or any other form of a non-transitory computer-readable storage medium. Such special-purpose computing devices may also combine custom hard-wired logic, ASICs, or FPGAs with custom programming to accomplish the techniques. The special-purpose computing devices may be desktop computer systems, server computer systems, portable computer systems, handheld devices, networking devices or any other device or combination of devices that incorporate hard-wired and/or program logic to implement the techniques.

The microprocessors or controllers described herein can be coordinated by operating system software, such as iOS, Android, Chrome OS, Windows XP, Windows Vista, Windows 7, Windows 8, Windows 10, Windows Server, Windows CE, Unix, Linux, SunOS, Solaris, macOS, Blackberry OS, VxWorks, or other compatible operating systems. In other embodiments, the computing device may be controlled by a proprietary operating system. Conventional operating systems control and schedule computer processes for execution, perform memory management, provide file system, networking, I/O services, and provide a user interface functionality, such as a graphical user interface ("GUI"), among other things.

The microprocessors and/or controllers described herein may implement the techniques described herein using customized hard-wired logic, one or more ASICs or FPGAs, firmware and/or program logic which causes microprocessors and/or controllers to be a special-purpose machine. According to one embodiment, parts of the techniques disclosed herein are performed a controller in response to executing one or more sequences instructions contained in a memory. Such instructions may be read into the memory from another storage medium, such as storage device. Execution of the sequences of instructions contained in the memory causes the processor or controller to perform the process steps described herein. In alternative embodiments, hard-wired circuitry may be used in place of or in combination with software instructions.

Moreover, the various illustrative logical blocks and modules described in connection with the embodiments disclosed herein can be implemented or performed by a machine, such as a processor device, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components. For example, some or all of the techniques described herein may be implemented in analog circuitry or mixed analog and digital circuitry.

Unless the context clearly requires otherwise, throughout the description and the claims, the words "comprise," "comprising," "include," "including," and the like are to be construed in an inclusive sense, as opposed to an exclusive or exhaustive sense; that is to say, in the sense of "including, but not limited to." The words "coupled" or connected," as generally used herein, refer to two or more elements that can be either directly connected, or connected by way of one or more intermediate elements. Additionally, the words "herein," "above," "below," and words of similar import, when used in this application, shall refer to this application as a whole and not to any particular portions of this application. Where the context permits, words in the Detailed Description using the singular or plural number can also include the plural or singular number, respectively. The words "or" in reference to a list of two or more items, is intended to cover all of the following interpretations of the word: any of the items in the list, all of the items in the list, and any combination of the items in the list. All numerical values provided herein are intended to include similar values within a range of measurement error.

Although this disclosure contains certain embodiments and examples, it will be understood by those skilled in the art that the scope of protection conferred shall be determined by the claims.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment. Any headings used herein are for the convenience of the reader only and are not meant to limit the scope.

The ranges disclosed herein also encompass any and all overlap, sub-ranges, and combinations thereof. Language such as "up to," "at least," "greater than," "less than," "between," and the like includes the number recited. Numbers preceded by a term such as "about" or "approximately" include the recited numbers and should be interpreted based on the circumstances (e.g., as accurate as reasonably possible under the circumstances, for example ±5%, ±10%, ±15%, etc.). For example, "about 3.5 mm" includes "3.5 mm." Phrases preceded by a term such as "substantially" include the recited phrase and should be interpreted based on the circumstances (e.g., as much as reasonably possible under the circumstances). For example, "substantially constant" includes "constant." Unless stated otherwise, all measurements are at standard conditions including ambient temperature and pressure.

## Claims

1. A laser scanner (100) comprising:
a housing (120);
a window (122);
a light emitting system (106) configured to output laser pulses of a first wavelength through the window;
a light detection system (108) configured to receive light of the laser pulses that is reflected by an object (104) through the window, wherein the light detection system is configured to direct the light that is received through the window to an optical sensor (142) that is configured to generate electrical signals from the received light;
a controller (110) comprising at least one processor, wherein the controller is configured to make a determination regarding a presence or position of the object based at least in part on the electrical signals; and
one or more light sources for illuminating at least a portion of the window with light of a second wavelength that is different from the first wavelength,
wherein the at least a portion of the window comprises diffusing features configured to diffuse the light of the second wavelength and to output the diffused light from the window,
wherein the controller is configured to operate the one or more light sources in response to the determination regarding the presence or position of the object to provide a visual indication of the determination,
wherein a first portion (122a) of the window has a cylindrical shape and has the diffusing features,
wherein a second portion (122b) of the window has a frustoconical shape and does not have the diffusing features,
wherein a large diameter portion of the second portion of the window is connected to the first portion of the window,
wherein the light emitting system is configured to output the laser pulses through the second portion of the window, and
wherein the light detection system is configured to receive light through the second portion of the window.

2. The laser scanner of Claim 1, wherein the light of the second wavelength is visible light, and wherein the light of the first wavelength is non-visible light.

3. The laser scanner of Claim 2, wherein the light of the first wavelength is near infrared light.

4. The laser scanner of Claim 1, wherein the diffusing features are configured to diffuse the light of the second wavelength more than the light of the first wavelength.

5. The laser scanner of Claim 1, wherein the at least a portion of the window having the diffusing features is substantially transparent to the light of the first wavelength.

6. The laser scanner of Claim 1, wherein a majority of the window includes the diffusing features and outputs the diffused light to provide the visual indication.

7. The laser scanner of Claim 1, wherein the entire window includes the diffusing features and outputs the diffused light to provide the visual indication.

8. The laser scanner of Claim 1, wherein the one or more light sources are disposed on a flexible printed circuit board.

9. The laser scanner of Claim 1, wherein the one or more light sources comprise at least one light source to output light of a first color and least one light source to output light of a second color.

10. The laser scanner of Claim 1, configured to output the diffused light across an azimuthal angle range of at least about 270 degrees.

11. The laser scanner of Claim 1, wherein the window is configured to guide light from the one or more light sources to the at least a portion of the window with the diffusing features.

12. A method of providing information regarding a presence or position of an object (104), the method comprising:
outputting sensor light through a window (122) in a direction towards an object (104);
receiving light of a return reflection of the sensor light from the object through the window;
generating electrical signals from the received light;
determining a presence or position of the object based at least in part on the electrical signals;
illuminating at least a portion of the window with visible light, wherein the at least a portion of the window comprises diffusing features;
diffusing, by the diffusing features, the visible light; and
outputting the diffused visible light from the window in response to the determination of the presence or position of the object,
wherein a first portion (122a) of the window has a cylindrical shape and has the diffusing features,
wherein a second portion (122b) of the window has a frustoconical shape and does not have the diffusing features,
wherein a large diameter portion of the second portion of the window is connected to the first portion of the window,
wherein the sensor light is output through the second portion of the window, and
wherein the light of a return reflection of the sensor light from the object is received through the second portion of the window.

## Patentansprüche

1. Laserscanner (100), umfassend:
ein Gehäuse (120);
ein Fenster (122);
ein lichtemittierendes System (106), das dazu konfiguriert ist, Laserimpulse einer ersten Wellenlänge durch das Fenster auszugeben;
ein Lichtdetektionssystem (108), das dazu konfiguriert ist, Licht der Laserimpulse zu empfangen, das von einem Objekt (104) durch das Fenster reflektiert wird, wobei das Lichtdetektionssystem dazu konfiguriert ist, das Licht, das durch das Fenster empfangen wird, zu einem optischen Sensor (142) zu leiten, der dazu konfiguriert ist, elektrische Signale aus dem empfangenen Licht zu erzeugen;
ein Steuergerät (110), das zumindest einen Prozessor umfasst, wobei das Steuergerät dazu konfiguriert ist, eine Bestimmung in Bezug auf eine Anwesenheit oder Position des Objekts basierend zumindest teilweise auf den elektrischen Signalen vorzunehmen; und
eine oder mehrere Lichtquellen zum Beleuchten zumindest eines Abschnitts des Fensters mit Licht einer zweiten Wellenlänge, die sich von der ersten Wellenlänge unterscheidet,
wobei der zumindest eine Abschnitt des Fensters diffundierende Merkmale umfasst, die dazu konfiguriert sind, das Licht der zweiten Wellenlänge zu diffundieren und das diffundierte Licht aus dem Fenster auszugeben,
wobei das Steuergerät dazu konfiguriert ist, die eine oder mehreren Lichtquellen als Reaktion auf die Bestimmung in Bezug auf die Anwesenheit oder Position des Objekts zu betreiben, um eine Sichtanzeige der Bestimmung bereitzustellen,
wobei ein erster Abschnitt (122a) des Fensters eine zylindrische Form aufweist und die diffundierenden Merkmale aufweist,
wobei ein zweiter Abschnitt (122b) des Fensters eine kegelstumpfförmige Form aufweist und die diffundierenden Merkmale nicht aufweist,
wobei ein Abschnitt mit großem Durchmesser des zweiten Abschnitts des Fensters mit dem ersten Abschnitt des Fensters verbunden ist,
wobei das lichtemittierende System dazu konfiguriert ist, die Laserimpulse durch den zweiten Abschnitt des Fensters auszugeben, und
wobei das Lichtdetektionssystem dazu konfiguriert ist, Licht durch den zweiten Abschnitt des Fensters zu empfangen.

2. Laserscanner nach Anspruch 1, wobei das Licht der zweiten Wellenlänge sichtbares Licht ist und wobei das Licht der ersten Wellenlänge nicht sichtbares Licht ist.

3. Laserscanner nach Anspruch 2, wobei das Licht der ersten Wellenlänge nahes Infrarotlicht ist.

4. Laserscanner nach Anspruch 1, wobei die diffundierenden Merkmale dazu konfiguriert sind, das Licht der zweiten Wellenlänge mehr als das Licht der ersten Wellenlänge zu diffundieren.

5. Laserscanner nach Anspruch 1, wobei der zumindest eine Abschnitt des Fensters mit den diffundierenden Merkmalen für das Licht der ersten Wellenlänge im Wesentlichen durchlässig ist.

6. Laserscanner nach Anspruch 1, wobei ein Großteil des Fensters die diffundierenden Merkmale beinhaltet und das diffundierte Licht ausgibt, um die Sichtanzeige bereitzustellen.

7. Laserscanner nach Anspruch 1, wobei das gesamte Fenster die diffundierenden Merkmale beinhaltet und das diffundierte Licht ausgibt, um die Sichtanzeige bereitzustellen.

8. Laserscanner nach Anspruch 1, wobei die eine oder mehreren Lichtquellen auf einer flexiblen Leiterplatte angeordnet sind.

9. Laserscanner nach Anspruch 1, wobei die eine oder mehreren Lichtquellen zumindest eine Lichtquelle zum Ausgeben von Licht einer ersten Farbe und zumindest eine Lichtquelle zum Ausgeben von Licht einer zweiten Farbe umfassen.

10. Laserscanner nach Anspruch 1, der dazu konfiguriert ist, das diffundierte Licht über einen Azimutwinkelbereich von zumindest etwa 270 Grad auszugeben.

11. Laserscanner nach Anspruch 1, wobei das Fenster dazu konfiguriert ist, Licht von der einen oder den mehreren Lichtquellen zu dem zumindest einen Abschnitt des Fensters mit den diffundierenden Merkmalen zu leiten.

12. Verfahren zum Bereitstellen von Informationen bezüglich einer Anwesenheit oder Position eines Objekts (104), wobei das Verfahren umfasst:
Ausgeben von Sensorlicht durch ein Fenster (122) in eine Richtung zu einem Objekt (104);
Empfangen von Licht einer Rückreflexion des Sensorlichts aus dem Objekt durch das Fenster;
Erzeugen elektrischer Signale aus dem empfangenen Licht;
Bestimmen einer Anwesenheit oder Position des Objekts basierend zumindest teilweise auf den elektrischen Signalen;
Beleuchten zumindest eines Abschnitts des Fensters mit sichtbarem Licht, wobei der zumindest eine Abschnitt des Fensters diffundierende Merkmale umfasst;
Diffundieren des sichtbaren Lichts durch die diffundierenden Merkmale; und
Ausgeben des diffundierten sichtbaren Lichts aus dem Fenster als Reaktion auf die Bestimmung der Anwesenheit oder Position des Objekts,
wobei ein erster Abschnitt (122a) des Fensters eine zylindrische Form aufweist und die diffundierenden Merkmale aufweist,
wobei ein zweiter Abschnitt (122b) des Fensters eine kegelstumpfförmige Form aufweist und die diffundierenden Merkmale nicht aufweist,
wobei ein Abschnitt mit großem Durchmesser des zweiten Abschnitts des Fensters mit dem ersten Abschnitt des Fensters verbunden ist,
wobei das Sensorlicht durch den zweiten Abschnitt des Fensters ausgegeben wird, und
wobei das Licht einer Rückreflexion des Sensorlichts aus dem Objekt durch den zweiten Abschnitt des Fensters empfangen wird.

## Revendications

1. Scanner laser (100) comprenant :
un boîtier (120) ;
une fenêtre (122) ;
un système électroluminescent (106) configuré pour émettre des impulsions laser d'une première longueur d'onde à travers la fenêtre ;
un système de détection de lumière (108) configuré pour recevoir la lumière des impulsions laser qui est réfléchie par un objet (104) à travers la fenêtre, dans lequel le système de détection de lumière est configuré pour diriger la lumière qui est reçue à travers la fenêtre vers un capteur optique (142) qui est configuré pour générer des signaux électriques à partir de la lumière reçue ;
un contrôleur (110) comprenant au moins un processeur, dans lequel le contrôleur est configuré pour effectuer une détermination concernant une présence ou une position de l'objet sur la base au moins en partie des signaux électriques ; et
une ou plusieurs sources de lumière pour éclairer au moins une partie de la fenêtre avec une lumière d'une seconde longueur d'onde qui est différente de la première longueur d'onde,
dans lequel l'au moins une partie de la fenêtre comprend des caractéristiques de diffusion configurées pour diffuser la lumière de la seconde longueur d'onde et pour émettre la lumière diffusée à partir de la fenêtre,
dans lequel le contrôleur est configuré pour faire fonctionner l'une ou plusieurs sources de lumière en réponse à la détermination concernant la présence ou la position de l'objet afin de fournir une indication visuelle de la détermination,
dans lequel une première partie (122a) de la fenêtre a une forme cylindrique et présente les caractéristiques de diffusion,
dans lequel une seconde partie (122b) de la fenêtre a une forme tronconique et ne présente pas les caractéristiques de diffusion,
dans lequel une partie à grand diamètre de la seconde partie de la fenêtre est connectée à la première partie de la fenêtre,
dans lequel le système électroluminescent est configuré pour émettre les impulsions laser à travers la seconde partie de la fenêtre, et
dans lequel le système de détection de lumière est configuré pour recevoir de la lumière à travers la seconde partie de la fenêtre.

2. Scanner laser selon la revendication 1, dans lequel la lumière de la seconde longueur d'onde est une lumière visible, et dans lequel la lumière de la première longueur d'onde est une lumière non visible.

3. Scanner laser selon la revendication 2, dans lequel la lumière de la première longueur d'onde est une lumière proche infrarouge.

4. Scanner laser selon la revendication 1, dans lequel les caractéristiques de diffusion sont configurées pour diffuser la lumière de la seconde longueur d'onde plus que la lumière de la première longueur d'onde.

5. Scanner laser selon la revendication 1, dans lequel l'au moins une partie de la fenêtre présentant les caractéristiques de diffusion est sensiblement transparente à la lumière de la première longueur d'onde.

6. Scanner laser selon la revendication 1, dans lequel une majorité de la fenêtre comprend les caractéristiques de diffusion et émet la lumière diffusée pour fournir l'indication visuelle.

7. Scanner laser selon la revendication 1, dans lequel la fenêtre entière comprend les caractéristiques de diffusion et émet la lumière diffusée pour fournir l'indication visuelle.

8. Scanner laser selon la revendication 1, dans lequel l'une ou plusieurs sources de lumière sont disposées sur une carte de circuit imprimé flexible.

9. Scanner laser selon la revendication 1, dans lequel l'une ou plusieurs sources de lumière comprennent au moins une source de lumière pour émettre une lumière d'une première couleur et au moins une source de lumière pour émettre une lumière d'une deuxième couleur.

10. Scanner laser selon la revendication 1, configuré pour émettre la lumière diffusée sur une plage d'angle azimutal d'au moins environ 270 degrés.

11. Scanner laser selon la revendication 1, dans lequel la fenêtre est configurée pour guider la lumière depuis l'une ou plusieurs sources de lumière vers l'au moins une partie de la fenêtre avec les caractéristiques de diffusion.

12. Procédé de fourniture d'informations concernant une présence ou une position d'un objet (104), le procédé comprenant :
l'émission d'une lumière de capteur à travers une fenêtre (122) dans une direction vers un objet (104) ;
la réception d'une lumière d'une réflexion retour de la lumière de capteur en provenance de l'objet à travers la fenêtre ;
la génération de signaux électriques à partir de la lumière reçue ;
la détermination d'une présence ou d'une position de l'objet sur la base au moins en partie des signaux électriques ;
l'éclairage d'au moins une partie de la fenêtre avec une lumière visible, dans lequel l'au moins une partie de la fenêtre comprend des caractéristiques de diffusion ;
la diffusion, par les caractéristiques de diffusion, de la lumière visible ; et
l'émission de la lumière visible diffusée depuis la fenêtre en réponse à la détermination de la présence ou de la position de l'objet,
dans lequel une première partie (122a) de la fenêtre a une forme cylindrique et présente les caractéristiques de diffusion,
dans lequel une seconde partie (122b) de la fenêtre a une forme tronconique et ne présente pas les caractéristiques de diffusion,
dans lequel une partie à grand diamètre de la seconde partie de la fenêtre est connectée à la première partie de la fenêtre,
dans lequel la lumière de capteur est émise à travers la seconde partie de la fenêtre, et
dans lequel la lumière d'une réflexion retour de la lumière de capteur en provenance de l'objet est reçue à travers la seconde partie de la fenêtre.
